# EUROPÄISCHE PATENTANMELDUNG

(11) **EP 2 602 063 A1**
(43) Veröffentlichungstag der Anmeldung: **12.06.2013**
(21) Anmeldenummer: 11009767.2
(22) Anmeldetag: 10.12.2011
(51) Int. Cl.: B25D 17/00, B23B 51/12

(54) **Distanzscheibe für eine Schlagbohrmaschine mit System SDS-max**

(71) Anmelder: Pizzuto, Santo, 17051 Andora (IT)
(72) Erfinder: Pizzuto, Santo, 17051 Andora (IT)

(57) **Zusammenfassung**

Die Scheibe wird von unten auf den Bohrer aufgeschoben, welcher dann mit der Maschine verbunden wird. Durch Verschieben der Scheibe kann man den Bohrmodus regeln. Die Distanzierung wird mit versenkten Inbusschrauben fixiert. Mit der Einstellung "Schlagbohren" unterdrückt sie dann das Schlagen auf den letzten Zentimetern, sodass die Maschine nur noch bohrt. So wird ein sauberes Durchbohren von Mauern in einem Arbeitsgang möglich, ohne dass ein Maschinenwechsel nötig ist.

## Beschreibung

Die einfache Ausführung der Schlagbohrer verfügt produktionsmäßig über nur zwei Einstellungen: 1. Schlagen - 2. Schlagbohren.
Bei Verwendung einer Distanzscheibe (Erfindung) wird bei der Einstellung "2. Schlagbohren" das Schlagen unterdrückt, so dass nur das Bohren möglich wird.

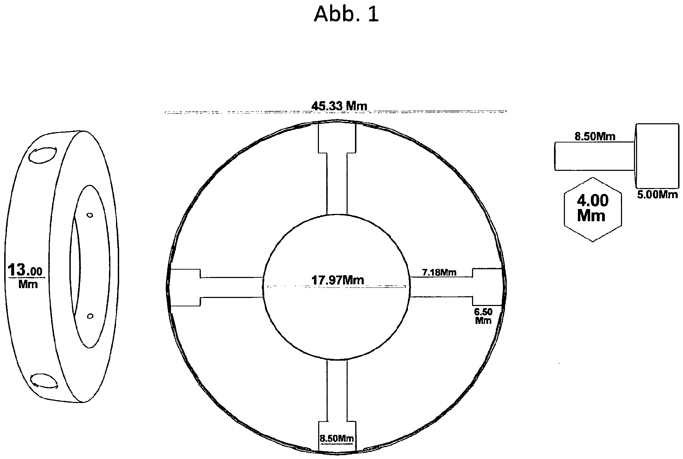

Die Distanzscheibe besteht aus einer runden Stahlscheibe mit dem Durchmesser 45,33 mm und der Stärke von 13 mm. Diese Scheibe hat in der Mitte ein Loch von 17,97 mm Durchmesser.
In der Scheibe befinden sich vom äußeren Rand her zum Loch hin symmetrisch 4 Bohrungen mit einer Tiefe von jeweils 13,68 mm. Diese 4 Bohrungen sind für die Aufnahme von 4 Inbusschrauben der Länge 13,50 mm inkl. Kopf (4 mm) und Gewinde Ø 5 mm, mit dem entsprechenden Gewinde und dem Raum für den Inbusschraubenkopf (8,50 mm x 6,50 mm) ausgestattet (s. Abb. 1).

Die Scheibe kann auf die Schlagbohreinsätze nach dem System SDS-max unmittelbar vor das Aufnahmefutter aufgesetzt und durch die 4 Schrauben fixiert werden. Damit wird die Schlagfunktion beim Schlagbohren verhindert, die Maschine bohrt nur noch.

### Anwendung:

Beim Durchbohren von Mauern kommt es beim normalen Schlagbohren (mit dem System SDS-max) auf den letzten Zentimetern zu breiteren Absprengungen des Außenmauerwerks (Putz).
Das wird durch die Anwendung der Distanzscheibe (ohne dass ein Maschinenwechsel nötig ist) vermieden.

## Patentansprüche

1. Der Patentanspruch bezieht sich auf eine Distanzscheibe für Schlagbohrmaschinen mit SDS-max-Anschluss.

2. Die Distanzscheibe besteht aus einer runden Stahlscheibe mit dem Durchmesser 45,33 mm und der Stärke von 13 mm. Diese Scheibe hat in der Mitte ein Loch von 17,97 mm Durchmesser.

3. In der Scheibe befinden sich vom äußeren Rand her zum Loch hin symmetrisch 4 Bohrungen mit einer Tiefe von jeweils 13,68 mm.

4. Diese 4 Bohrungen sind für die Aufnahme von 4 Inbusschrauben der Länge 13,50 mm inkl. Kopf (4 mm) und Gewinde 0 5 mm, mit dem entsprechenden Gewinde und dem Raum für den Schraubenkopf (8,50 mm x 6,50 mm) ausgestattet.

5. Die außenliegenden Kanten der Scheibe sind abgerundet.
